# EUROPEAN PATENT APPLICATION

(11) **EP 1 939 875 A1**
(43) Date of publication of application: **02.07.2008**
(21) Application number: 06810664.0
(22) Date of filing: 27.09.2006
(51) Int. Cl.: G11B 20/12, G11B 7/004, G11B 7/0045, G11B 20/10, H04N 5/85

(54) **RECORDING DEVICE AND RECORDING METHOD FOR RECORDING INFORMATION ON INFORMATION RECORDING MEDIUM HAVING A PLURALITY OF LAYERS**

(30) Priority: 27.09.2005 JP 2005279574
(71) Applicant: Pioneer Corporation, Tokyo 153-8654 (JP)
(72) Inventor: ISHII, Hidehiro, Tokorozawa-shi Saitama 359-8522 (JP); SAWABE, Takao, Tokorozawa-shi Saitama 359-8522 (JP)
(74) Representative: Viering, Jentschura & Partner
(86) International application number: PCT/JP2006/319206
(87) International publication number: WO 2007/037287

(57) **Abstract**

In a two-layer rewritable DVD, when a first recordable region and a second recordable region exist in different layers and a distance (Lm) between the recordable regions is greater than a predetermined distance (Lr), a relay region is formed at a position in the same layer as the second recordable region and a distance to the first recordable region is equal to or blow the predetermined distance (Lr) and information is successively recorded in the order on of the first recordable region, the relay region, and the second recordable region. The predetermined distance (Lr) is, for example, a maximum value of the distance guaranteeing a seamless reproduction between information recorded in the two recordable regions.

## Description

### Technical Field

The present invention relates to a recording apparatus for and a recording method of recording information onto an information recording disk with a plurality of recording layers.

### Background Art

Currently, as a recordable type recording disk on which a user can record information, there are a write-once type recording disk and a rewritable type recording disk. As the rewritable type recording disk, a rewritable type DVD, such as a DVD-RW, a DVD+RW, and a DVD-RAM, is popular.

For the recordable type recording disk, a VR (Video Recording) standard is set. According to the VR standard, a user can record content data, such as a TV program, onto the recordable type DVD, and the user can edit the data that is once recorded on the recordable type DVD.

Moreover, in the case of the rewritable type DVD, a user can delete the data that is once recorded on the rewritable type DVD and can record another data again in the location where the data is deleted, by using a DVD recorder.

For example, it is assumed that a user sequentially records five contents #1, #2, #3, #4, and #5 in this order onto an unrecorded single-layer rewritable type DVD on which data has not been recorded yet. In this case, data blocks #1 to #5, corresponding to the contents #1 to #5, are sequentially recorded from the inner circumferential side to the outer circumferential side of the single-layer rewritable type DVD. That is, the data block #1 is recorded near the innermost circumferential side of the single-layer rewritable type DVD, and the data block #5 is recorded near the outermost circumferential side of the single-layer rewritable type DVD.

Moreover, it is assumed that the total size of the data of the data blocks #1 to #5 is nearly equal to the size of a user data area of the single-layer rewritable type DVD. In this case, after the data blocks #1 to #5 are recorded, there is no longer a free space in the single-layer rewritable type DVD.

It is assumed that the user deletes only the contents #1 and #5 later. This allows each of the area in which the data block #1 is recorded and the area in which the data block #5 is recorded to be a recordable area, in the single-layer rewritable type DVD. That is, a first recordable area is created near the innermost circumferential side of the single-layer rewritable type DVD, and a second recordable area is created near the outermost circumferential side. Incidentally, the "recordable area" is an area in which information or data can be recorded, including an unrecorded area, a free space, an area in which previously recorded information or data is deleted and overwriting is allowed, and the like. Of the unrecorded area, an area reserved to record information or data later is not included in the "recordable area".

Then, it is assumed that the user records a new content #6 onto the single-layer rewritable type DVD. If the size of the data corresponding to the content #6 is greater than the size of the first recordable area and is greater than the size of the second recordable area, the data corresponding to the content #6 is divided and sequentially recorded into the first recordable area and the second recordable area. That is, the data corresponding to the content #6 is divided into a data block #6A and a data block #6B, and the data block #6A is recorded near the innermost circumferential side of the single-layer rewritable type DVD, and the data block #6B is recorded near the outermost circumferential side of the single-layer rewritable type DVD. As a result, the two data blocks to be seamlessly reproduced as one content are recorded significantly away from each other in the user data area of the single-layer rewritable type DVD.

By the way, in order to guarantee the seamless reproduction between the data blocks, which are recorded significantly away from each other in the user data area, a reproducing apparatus (e.g. a DVD player) with a stream buffer memory is preferably provided. That is, during the jump (or search) of the irradiation position of a light beam from the data block recorded on the inner circumferential side to the data block recorded on the outer circumferential side, data reading is temporarily stopped. In order to continue the data reproduction even during this time, the data is read in advance and the read data is stored into the stream buffer memory, and when the data reading is temporarily stopped because of the jump of the irradiation position of the light beam, the data stored in the stream buffer memory is consumed to maintain the data reproduction.

Moreover, if it is hard to provide a large memory capacity for the reproducing apparatus with the stream buffer memory because of a request of reduction in production cost, it is necessary to add some more limits or conditions for the structure of the data to be recorded onto the recordable type DVD and the structure of the reproducing apparatus in order to guarantee the aforementioned seamless reproduction.

The DVD standard generally defines the following conditions in order to guarantee the seamless reproduction between the data blocks, which are recorded away from each other in the user data area of the single-layer recordable type DVD.
(a1) The data block (CDA: Contiguous Data Area) recorded in the user data area is physically continuous and has a capacity of 2M bytes or more.
(a2) The reproducing apparatus has the stream buffer memory with at least a memory capacity of 16M bits.
(a3) The reproducing apparatus completes the search within 1.5 seconds, no matter where is searched on a disk.

The DVD standards guarantees the seamless reproduction between the data blocks as long as the above conditions are satisfied, no matter how far the two data blocks are recorded from each other in the user data area of the single-layer rewritable type DVD.

### Disclosure of Invention

### Subject to be Solved by the Invention

By the way, a recordable type DVD with two recording layers on one side is currently under development.

In considering the seamless reproduction between the data blocks in the dual-layer recordable type DVD, it is necessary to consider not only the case that the two data blocks are recorded significantly away from each other in the user data area of the same layer but also the case that the two data blocks are recorded in the different layers. Moreover, if the reproducing apparatus searches between the two data blocks recorded in the different layers, it is necessary to jump the irradiation position of the light beam across or over the layers. If the irradiation position of the light beam is jumped across or over the layers, it is necessary to consider that it may take a longer time in the jump operation, compared to the case that the irradiation position of the light beam is jumped in the same layer.

In this regard, the DVD standard generally defines the following matters for the reproducing apparatus.
(b1) If the two data blocks recorded in the different layers are at a distance of 0 to 5000 sectors, it takes within 1.4 seconds to complete the jump.
(b2) If the two data blocks recorded in the different layers are at a distance of 15001 to 65536 sectors, it takes within 1.5 seconds to complete the jump.

Now, weighing the aforementioned matter (a3) against the matter (b2), the seamless reproduction between the data blocks is guaranteed if the two data blocks recorded in the different layers are at a distance of 15001 to 65536 sectors.

However, if the distance between the two data blocks recorded in the different layers is greater than 65536 sectors, the seamless reproduction is not guaranteed.

As described above, in the rewritable type DVD, a user can delete the data that is once recorded, and can record another data in the location where the data is deleted. Therefore, it may happen that the two data blocks to be seamlessly reproduced are recorded in the different layers and that the distance between the two data blocks recorded in the different layers is greater than 65536 sectors.

Thus, the seamless reproduction is not likely performed in reality, although the user records one content onto the dual-layer rewritable type DVD and expects the recorded content to be seamlessly reproduced. This disappoints the user's expectation, which is not preferable.

In order to solve the above-exemplified problems, it is therefore an object of the present invention to provide a recording apparatus, a recording method, and a computer program, which allow information to be recorded onto a dual-layer information recording medium so as to guarantee the seamless reproduction even if the two recordable areas are in different layers on the information recording medium with the plurality of layers and even if the recordable areas are significantly away from each other.

### Means for Solving the Object

The above object of the present invention can be achieved by a first recording apparatus for recording information onto an information recording medium with a plurality of layers, the recording apparatus provided with: a distance recognizing device for recognizing a distance between a first recordable area and a second recordable area, which exist in different layers; a distance judging device for judging whether or not the distance recognized by the distance recognizing device is less than or equal to a predetermined distance; and a recording device for sequentially recording the information to be sequentially reproduced, into (a) the first recordable area, (b) a relay area which exists in the same layer as that of the second recordable area and which is at the predetermined distance or less from the first recordable area, and (c) the second recordable area, in this order if the distance recognized by the distance recognizing device is not less than or equal to the predetermined distance on the basis of a result of the judgment of the distance judging device.

The above object of the present invention can be also achieved by a second recording apparatus for recording information onto an information recording medium with a plurality of layers, the recording apparatus provided with: a distance recognizing device for recognizing a distance between a first recordable area and a second recordable area, which exist in different layers; a distance judging device for judging whether or not the distance recognized by the distance recognizing device is less than or equal to a predetermined distance; and a recording device for sequentially recording the information to be sequentially reproduced, into (a) the first recordable area, (b) a relay area which exists in the same layer as that of the first recordable area and which is at the predetermined distance or less from the second recordable area, and (c) the second recordable area, in this order if the distance recognized by the distance recognizing device is not less than or equal to the predetermined distance on the basis of a result of the judgment of the distance judging device.

The above object of the present invention can be also achieved by a third recording apparatus for recording information onto an information recording medium with a plurality of layers, the recording apparatus provided with: a distance recognizing device for recognizing a distance between two recordable areas, which exist in different layers; a distance judging device for judging whether or not the distance recognized by the distance recognizing device is less than or equal to a predetermined distance; and a relay area forming device for forming a relay area in a location which is in the same layer as that of one of the two recordable areas and which is at the predetermined distance or less from the other recordable area if the distance recognized by the distance recognizing device is not less than or equal to the predetermined distance on the basis of a result of the judgment of the distance judging device.

The above object of the present invention can be also achieved by a first recording method of recording information onto an information recording medium with a plurality of layers, the recording method provided with: a distance recognizing process of recognizing a distance between a first recordable area and a second recordable area, which exist in different layers; a distance judging process of judging whether or not the distance recognized by the distance recognizing process is less than or equal to a predetermined distance; and a recording process of sequentially recording the information to be sequentially reproduced, into (a) the first recordable area, (b) a relay area which exists in the same layer as that of the second recordable area and which is at the predetermined distance or less from the first recordable area, and (c) the second recordable area, in this order if the distance recognized by the distance recognizing process is not less than or equal to the predetermined distance on the basis of a result of the judgment of the distance judging process.

The above object of the present invention can be also achieved by a second recording method of recording information onto an information recording medium with a plurality of layers, the recording method provided with: a distance recognizing process of recognizing a distance between a first recordable area and a second recordable area, which exist in different layers; a distance judging process of judging whether or not the distance recognized by the distance recognizing process is less than or equal to a predetermined distance; and a recording process of sequentially recording the information to be sequentially reproduced, into (a) the first recordable area, (b) a relay area which exists in the same layer as that of the first recordable area and which is at the predetermined distance or less from the second recordable area, and (c) the second recordable area, in this order if the distance recognized by the distance recognizing process is not less than or equal to the predetermined distance on the basis of a result of the judgment of the distance judging process.

The above object of the present invention can be also achieved by a third recording method of recording information onto an information recording medium with a plurality of layers, the recording method provided with: a distance recognizing process of recognizing a distance between two recordable areas, which exist in different layers; a distance judging process of judging whether or not the distance recognized by the distance recognizing process is less than or equal to a predetermined distance; and a relay area forming process of forming a relay area in a location which is in the same layer as that of one of the two recordable areas and which is at the predetermined distance or less from the other recordable area if the distance recognized by the distance recognizing process is not less than or equal to the predetermined distance on the basis of a result of the judgment of the distance judging process.

The above object of the present invention can be also achieved by a computer program making a computer function as the first, second, or third recording apparatus of the present invention (including its various aspects).

The above object of the present invention can be also achieved by a computer program product in a computer-readable medium for tangibly embodying a program of instructions executable by a computer, the computer program product making the computer function as the aforementioned first, second, or third recording apparatus of the present invention (including its various aspects).

According to each of the computer program products of the present invention, the aforementioned first, second, or third recording apparatus of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the aforementioned first, second, or third recording apparatus of the present invention.

These effects and other advantages of the present invention will become more apparent from the following embodiment and example.

### Brief Description of Drawings

[FIG. 1] FIG. 1 is a block diagram showing a recording apparatus in an embodiment of the present invention.
[FIG. 2] FIG. 2 is an explanatory diagram showing a dual-layer rewritable type DVD.
[FIG. 3] FIG. 3 is a flowchart showing a data recording operation of the recording apparatus in FIG. 1.
[FIG. 4] FIG. 4 is a flowchart showing the continuation of the data recording operation in FIG. 2.
[FIG. 5] FIG. 5 is a flowchart showing the continuation of the data recording operation in FIG. 2.
[FIG. 6] FIG. 6 is a flowchart showing a relay area forming process.
[FIG. 7] FIG. 7 is an explanatory diagram showing a recordable area which exists in a first state in the dual-layer rewritable type DVD.
[FIG. 8] FIG. 8 is an explanatory diagram showing the recordable area which exists in a second state in the dual-layer rewritable type DVD.
[FIG. 9] FIG. 9 is an explanatory diagram showing the state that data is recorded in the recordable area of the dual-layer rewritable type DVD.
[FIG. 10] FIG. 10 is an explanatory diagram showing the recordable area which exists in a third state in the dual-layer rewritable type DVD.
[FIG. 11] FIG. 11 is an explanatory diagram showing the state that the relay area is formed in a second layer of the dual-layer rewritable type DVD.
[FIG. 12] FIG. 12 is an explanatory diagram showing the state that the relay area is formed in a second layer of the dual-layer rewritable type DVD.
[FIG. 13] FIG. 13 is an explanatory diagram showing the state that the data is recorded in the recordable area of the dual-layer rewritable type DVD.
[FIG. 14] FIG. 14 is an explanatory diagram showing the state that the relay area is formed in a first layer of the dual-layer rewritable type DVD.
[FIG. 15] FIG. 15 is a flowchart showing a judging process of judging the need of the formation of the relay area and the relay area forming process.
[FIG. 16] FIG. 16 is a block diagram showing a recording apparatus in an example of the present invention.

### Description of Reference Codes

10, 100 recording apparatus
11 distance recognizing device
12 distance judging device
13 recording device
14 layer judging device
15 distance measuring device
16 relay area forming device

### Best Mode for Carrying Out the Invention

Hereinafter, the best mode for carrying out the present invention will be explained in each embodiment in order with reference to the drawings.

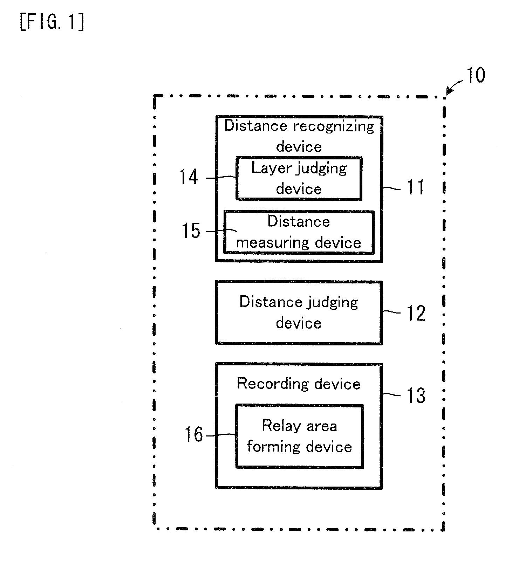

FIG. 1 shows a recording apparatus in an embodiment of the present invention. A recording apparatus 10 in FIG. 1 is a recording apparatus for recording information or data onto a dual-layer rewritable type DVD, for example, a DVD recorder. The rewritable type DVD includes, for example, a DVD-RW, a DVD+RW, a DVD-RAM, and the like. Incidentally, the rewritable type information recording medium which can be dealt on the recording apparatus of the present invention is not limited to the rewritable type DVD, but may be another rewritable type information recording medium, such as a rewritable type Blu-ray disc and a rewritable type HD DVD. Moreover, depending on the way of applying it, the present invention may be applied to a write-once type information recording medium, such as a DVD-R and a DVD+R. That is, the present invention can be embodied in an aspect which does not allow overwriting. Moreover, this embodiment illustrates the dual-layer information recording medium; however, the present invention can be also applied to an information recording medium with three or more layers within a scope of the effect. Moreover, the recording apparatus of the present invention is not limited to a DVD recorder, but may be another recorder, or a computer or car navigation system with a function of recording the data onto the information recording medium. Moreover, the information or data to be recorded onto the dual-layer information recording medium by the recording apparatus of the present invention is content data, such as video data, image data, and audio data, or text data, numeric data, or the like. The information or data to be recorded onto the dual-layer information recording medium by the recording apparatus of the present invention includes management information for managing or control information for controlling the reproduction of the content data.

As shown in FIG. 1, the recording apparatus 10 is provided with: a distance recognizing device 11; a distance judging device 12; and a recording device 13.

The distance recognizing device 11 recognizes a distance between a first recordable area and a second recordable area, which exist in different layers. The distance recognizing device 11 is provided with: a layer judging device 14; and a distance measuring device 15. The layer judging device 14 judges whether or not the first recordable area and the second recordable area are recorded in the different layers. The distance measuring device 15 measures the distance between the first recordable area and the second recordable area. The distance recognizing device 11 is constructed, for example, of: an arithmetic processing apparatus, such as a CPU and a MPU; and a memory device, such as a ROM (Read Only Memory) and a RAM (Random Access Memory).

The distance judging device 12 judges whether or not the distance between the first recordable area and the second recordable area, which is recognized by the distance recognizing device 11, is less than or equal to a predetermined distance. The distance judging device 12 is constructed, for example, of: an arithmetic processing apparatus, such as a CPU and a MPU; and a memory device, such as a ROM and a RAM.

The recording device 13 records the data into the recordable area of the dual-layer rewritable type DVD. Specifically, the recording device 13 records the data to be sequentially reproduced, into (a) the first recordable area, (b) a relay area, which exists in the same layer as that of the second recordable area and which is at the predetermined distance or less from the first recordable area, and (c) the second recordable area, in this order if the distance between the first recordable area and the second recordable area, which is recognized by the distance recognizing device 11, is not less than or equal to the predetermined distance on the basis of the judgment result of the distance judging device 12.

Moreover, the recording device 13 is provided with a relay area forming device 16. The relay area forming device 16 forms the relay area in a location which is in the same layer of the second recordable area and which is at the predetermined distance or less from the first recordable area if the distance between the first recordable area and the second recordable area, which is recognized by the distance recognizing device 11, is not less than or equal to the predetermined distance on the basis of the judgment result of the distance judging device 12. Moreover, if another information or data is already recorded in the location to be regarded as the relay area, the relay area forming device 16 transfers the another information or data into the first recordable area, the second recordable area, or another recordable area, to thereby form a third recordable area in the location to be regarded as the relay area and set it as the relay area.

The recording device 13 is constructed, for example, of: an arithmetic processing apparatus, such as a CPU and a MPU; a control apparatus for controlling an optical system, such as an optical pickup; and a control apparatus for controlling a disk driving system, such as a spindle motor.

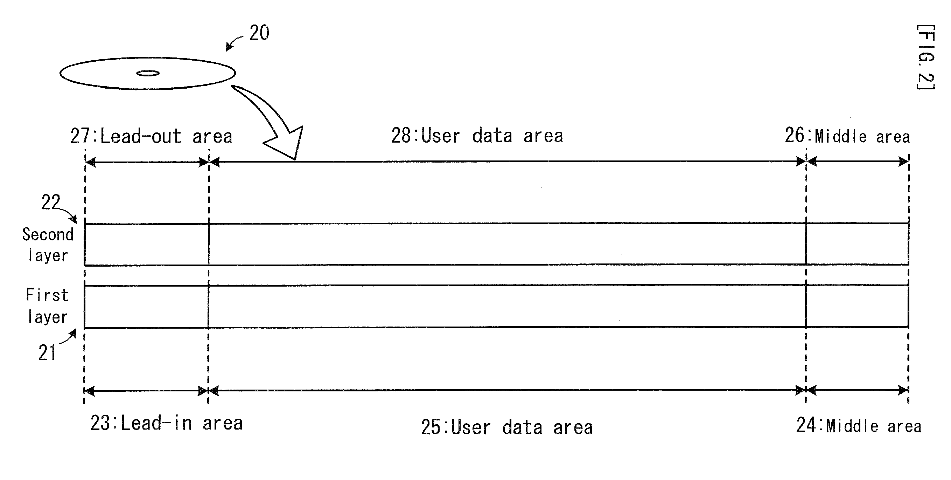

FIG. 2 shows a dual-layer rewritable type DVD onto which the information or data is recorded by the recording apparatus 10. In a first layer (layer 0) 21 of a dual-layer rewritable type DVD 20 in FIG. 2, a lead-in area 23 is formed on the inner circumferential side, a middle area 24 on the outer circumferential side, and a user data area 25 between the lead-in area 23 and the middle area 24. Moreover, in a second layer (layer 1) 22 of the dual-layer rewritable type DVD 20, a middle area 26 is formed on the outer circumferential side, a lead-out area 27 on the inner circumferential side, and a user data area 28 between the middle area 26 and the lead-out area 27.

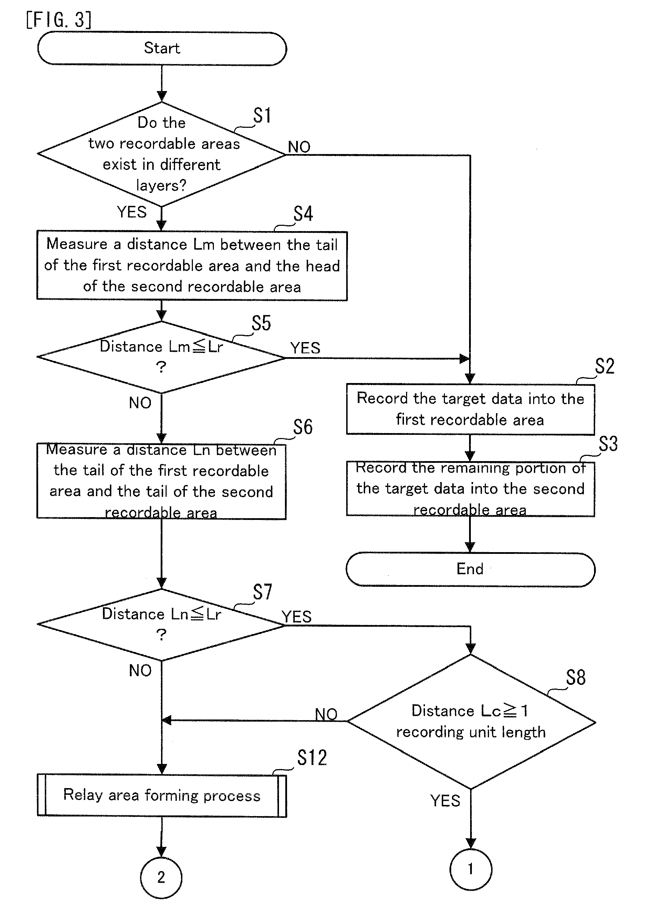

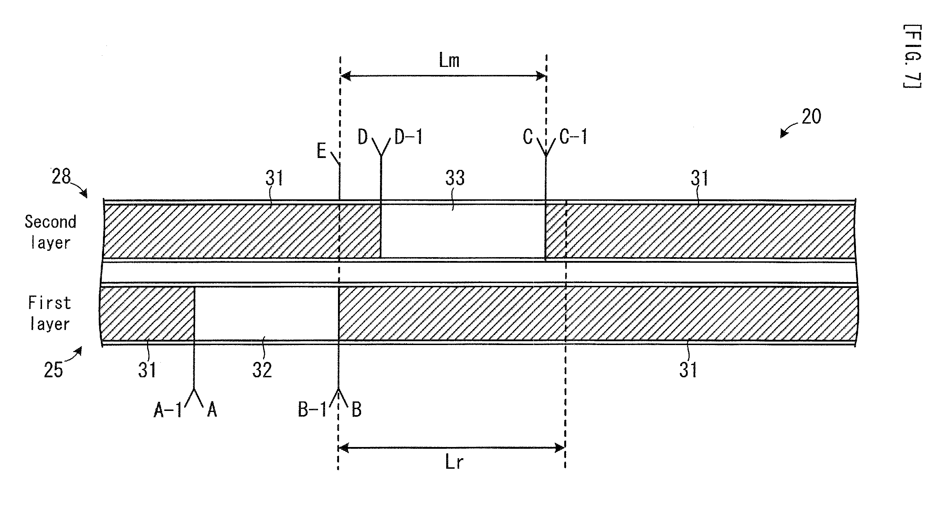

FIG. 3 to FIG. 6 show operations in data recording of the recording apparatus 10. FIG. 7 to FIG. 14 show the recordable area and the like existing in the dual-layer rewritable type DVD 20.

For example, it is assumed that after recording a long-time content onto the dual-layer rewritable type DVD 20, a user deletes one portion of the first half and one portion of the latter half of the content. As a result, it is assumed, as shown in FIG. 7, that after data 31 is once recorded into all the user data areas 25 and 28 of the dual-layer rewritable type DVD 20, one portion of the data recorded in the user data area 25 and one portion of the data recorded in the user data area 28 are deleted. Then, it is assumed at this stage that a first recordable area 32 exits in the first layer of the dual-layer rewritable type DVD 20 and that a second recordable area 33 exists in the second layer.

Moreover, it is assumed that the user instructs the recording apparatus 10 to record a new content onto the dual-layer rewritable type DVD 20 with such a recording state.

In response to this instruction, the recording apparatus 10 performs the operation of recording data corresponding to the new content (hereinafter referred to as "target data") onto the dual-layer rewritable type DVD 20. At this stage, the areas in which the data can be recorded on the dual-layer rewritable type DVD 20 are only the first recordable area 32 and the second recordable area 33. Thus, if the size of the target data is greater than the size of the first recordable area 32 and is greater than the size of the second recordable area 33, the recording apparatus 10 divides and sequentially records the target data into the first recordable area 32 and the second recordable area 33.

That is, the recording apparatus 10 performs the following operation. As shown in FIG. 3, the recording apparatus 10 firstly judges whether or not the first recordable area 32 and the second recordable area 33 exist in the different layers on the dual-layer rewritable type DVD 20 (step S1).

This judgment is performed by the layer judging device 14, for example, as follows. The layer judging device 14 refers to the management information recorded on the dual-layer rewritable type DVD 20, and obtains the address of a tail position of the first recordable area 32 or the layer number of the first recordable area 32. Then, the layer judging device 14 refers to the management information recorded on the dual-layer rewritable type DVD 20, and obtains the address of the tail position of the second recordable area 33 or the layer number of the second recordable area 33. Then, the layer judging device 14 judges whether or not the first recordable area 32 and the second recordable area 33 exist in the different layers on the basis of the obtained address or layer number.

As shown in FIG. 7, if the first recordable area 32 and the second recordable area 33 exist in the different layers (the step S1: YES), the recording apparatus 10 then measures a distance Lm between the tail of the first recordable area 32 and the head of the second recordable area 33 (step S4).

This measurement is performed by the distance measuring device 15, for example, as follows. The distance measuring device 15 firstly recognizes the address of a tail position B-1 (immediately before B) of the first recordable area 32. The address of the tail position B-1 can be recognized, for example, on the basis of the management information recorded on the dual-layer rewritable type DVD 20. Then, the distance measuring device 15 recognizes the address of a head position C of the second recordable area 33. The address of the head position C can be recognized, for example, on the basis of the management information recorded on the dual-layer rewritable type DVD 20. Then, the distance measuring device 15 recognizes the address of a position E corresponding to the tail position B-1 of the first recordable area 32, in the layer in which the second recordable area 33 exists. Then, the distance measuring device 15 calculates the number of sectors corresponding to the absolute value of the difference between the address of the position C and the address of the position E.

Incidentally, on the dual-layer information recording medium, both a certain position P in the first layer and a position Q in the second layer corresponding to the position P are not necessarily on the same linear line extending in a perpendicular direction to the layers. In the case of the dual-layer rewritable type DVD, on the standard, the position P and the position Q are away by a predetermined distance in the perpendicular direction to the layers (e.g. the position Q is shifted to the inner circumferential side by 23E0h from the position P). This considers the deviation between the layer 0 and the layer 1 of a light beam. From this viewpoint, even in FIG. 7, the position E corresponding to the position B-1 is not necessarily directly above the position B-1.

Then, the recording apparatus 10 judges whether or not the distance Lm between the tail of the first recordable area 32 and the head of the second recordable area 33 is less than or equal to a predetermined distance Lr (step S5). The value of the predetermined distance Lr is desirably the maximum value of the distance which guarantees the seamless reproduction between the information or data recorded in the two recordable areas. The predetermined distance Lr is, for example, 65536 sectors. The predetermined distance Lr is stored in advance in a memory or the like (not illustrated) of the recording apparatus 10.

The judgment in the step S5 is performed by the distance judging device 12, for example, as follows. The distance judging device 12 obtains the number of sectors corresponding to the absolute value of the difference between the address of the position C and the address of the position E, which is calculated by the distance measuring device 15. Then, the distance judging device 12 reads the value of the predetermined distance Lr from the memory of the recording apparatus 10. Then, the distance judging device 12 compares the number of sectors corresponding to the absolute value of the difference between the address of the position C and the address of the position E, with the value of the predetermined distance Lr (65536 sectors).

As shown in FIG. 7, if the distance Lm between the tail of the first recordable area 32 and the head of the second recordable area 33 is less than or equal to the predetermined distance Lr (the step S5: YES), the recording apparatus 10 sequentially records the target data into the first recordable area 32 and the second recordable area 33 (steps S2 and S3).

The recording is performed by the recording device 13, for example, as follows. The recording device 13 firstly records the target data from a head position A to the tail position B-1 of the first recordable area 32 (step S2), and then records the remaining portion of the target data from the head position C to a tail position D-1 of the second recordable area 33 (step S3).

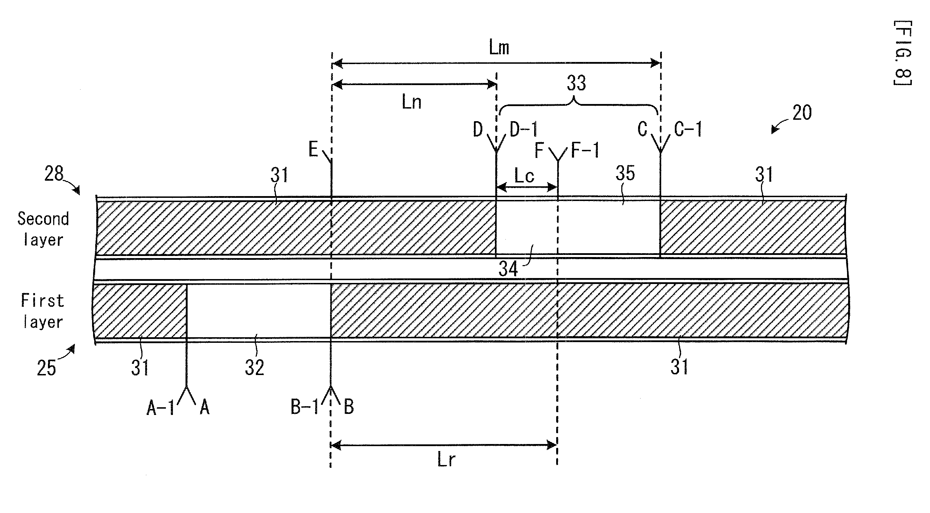

On the other hand, as shown in FIG. 8, if the distance Lm between the tail of the first recordable area 32 and the head of the second recordable area 33 is not less than or equal to the predetermined distance Lr (the step S5: NO), the recording apparatus 10 measures a distance Ln between the tail of the first recordable area 32 and the tail of the second recordable area 33 (step S6). The measurement is performed by the distance measuring device 15, as in the measurement of the distance Lm. In this step, the distance measuring device 15 calculates the number of sectors corresponding to the absolute value of the difference between the address of a position D and the address of the position E.

Then, the recording apparatus 10 judges whether or not the distance Ln between the tail of the first recordable area 32 and the tail of the second recordable area 33 is less than or equal to the predetermined distance Lr (step S7). The judgment is performed by the distance judging device 12, as in the aforementioned step S5. In this step, the distance judging device 12 compares the number of sectors corresponding to the absolute value of the difference between the address of the position D and the address of the position E, with the value of the predetermined distance Lr (e.g. 65536 sectors).

As shown in FIG. 8, if the distance Ln between the tail of the first recordable area 32 and the tail of the second recordable area 33 is less than or equal to the predetermined distance Lr (the step S7: YES), the recording apparatus 10 recognizes a position F. The position F is away from the position E corresponding to the tail position B-1 of the first recordable area 32, by the predetermined distance Lr, toward the second recordable area 33, in the second layer in which the second recordable area 33 exists. Then, the recording apparatus 10 judges whether or not a distance Lc between the tail position D and the position F of the second recordable area 33 is greater than or equal to one recording unit length (step S8). Incidentally, the "one recording unit length" is, for example, the length of the CDA, and it is the minimum length of a continuous area which has a capacity of at least 2M bytes or more and which is recognized by the recording apparatus as a free space.

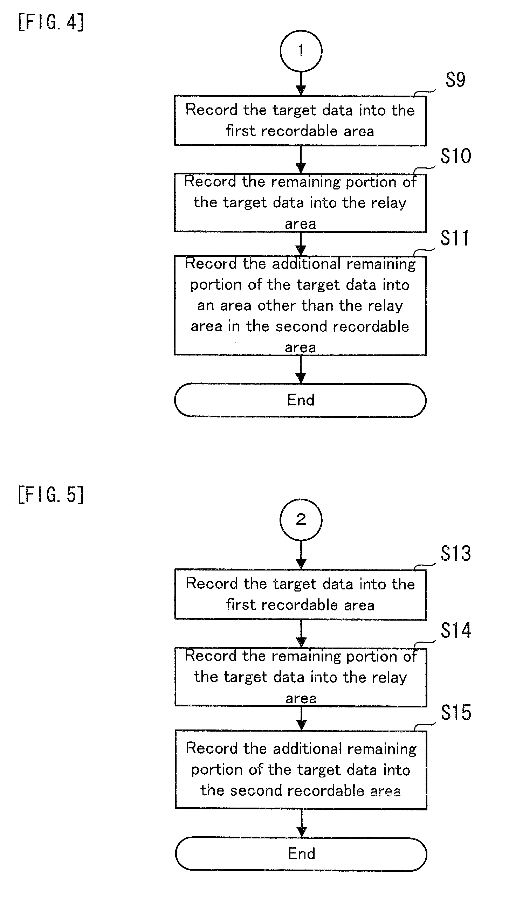

If the distance Lc between the position D and the position F is greater than or equal to the one recording unit length (the step S8: YES), the recording apparatus 10 sequentially records the target data into the first recordable area 32, a relay area 34, and an area 35 (step S9 to S11 in FIG. 4). The area 35 is an area other than the relay area 34 in the second recordable area 33.

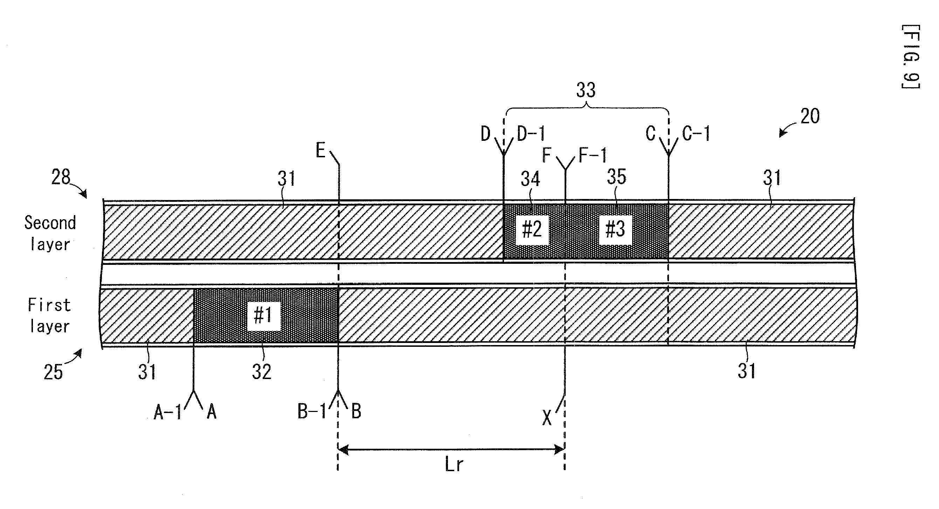

The recording is performed by the recording device 13, for example, as follows. The recording device 13 firstly records the target data from the head position A to the tail position B-1 of the first recordable area 32 (step S9). Then, the recording device 13 records the remaining portion of the target data from the head position F of the relay area created in the second recordable area 33 to the tail position D-1 of the relay area 34 (the tail position of the second recordable area 33) (step S10). Then, the recording device 13 records the additional remaining portion of the target data from the head position C of the area 35 (the head position of the second recordable area 33) other than the relay area in the second recordable area 33, to a tail position F-1 of the area 35 (immediately before the relay area 34) (step S11). As a result, as shown in FIG. 9, the target data is divided into the data blocks #1, #2, and #3 and recorded on the dual-layer rewritable type DVD 20.

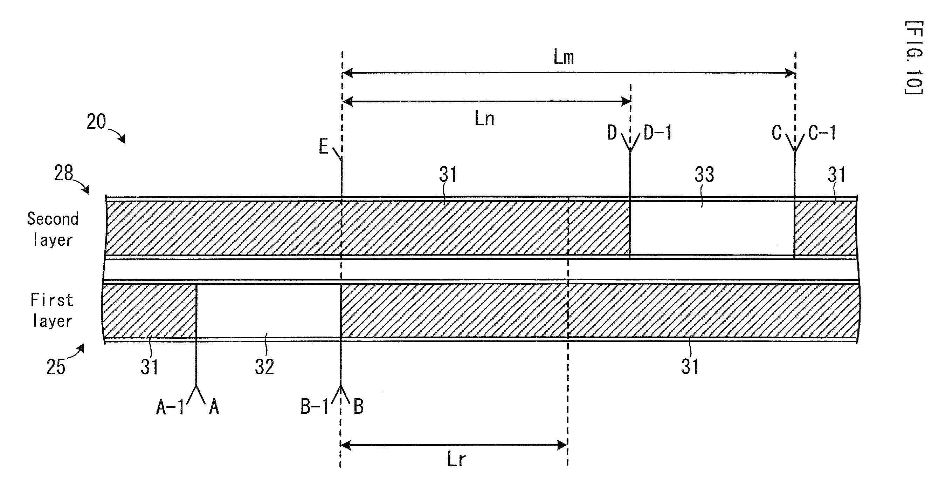

On the other hand, if the distance Lc between the position D and the position F is not greater than or equal to the one recording unit length (the step S8: NO), or as shown in FIG. 10, if the distance Ln between the tail of the first recordable area 32 and the tail of the second recordable area 33 is not less than or equal to the predetermined distance Lr (the step S7: NO), the recording apparatus 10 performs a relay area forming process (step S12).

The relay area forming process is performed by the relay area forming device 16, for example, as follows. The relay area forming device 16 firstly sets a location in which the relay area is formed in the the user data area 25 or 28 of the dual-layer rewritable type DVD 20 (step S21). Specifically, the relay area forming device 16 sets the head position of the relay area and the length of the relay area.

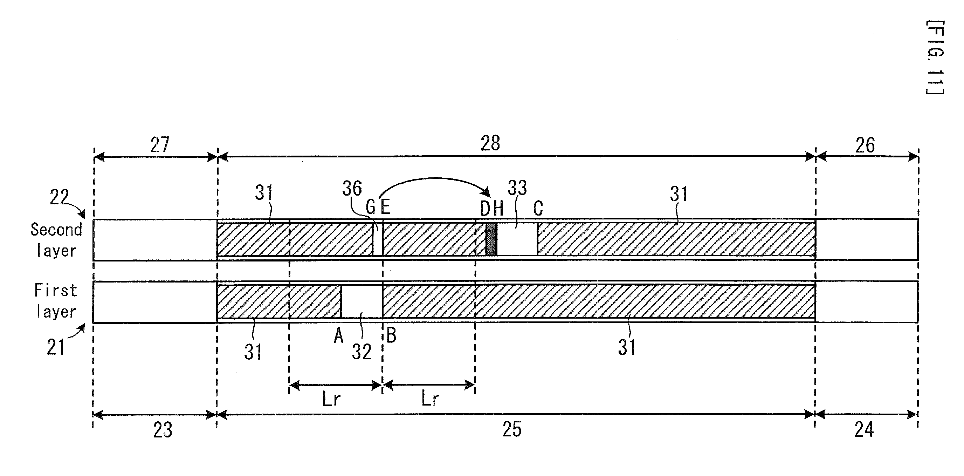

As shown in FIG. 11, the head position of the relay area 36 exists in the same layer as that of the second recordable area 33 and it is set in a range in which the distance from the first recordable area 32 is less than or equal to the predetermined distance Lr. The location at which the head position of the relay area 36 is set may be anywhere if it is in this range. Of course, the head position of the relay area 36 is desirably in the same layer as that of the second recordable area 33, as shown in FIG. 11, and it is desirably formed at a position corresponding to the tail position of the first recordable area 32. By setting the head position of the relay area 36 in the same layer as that of the second recordable area 33 and at the position corresponding to the tail position of the first recordable area 32, it is possible to reduce a time required from the end of reading the data recorded in the first recordable area 32 to the start of reading the data recorded in the relay area 36. Specifically, the relay area forming device 16 sets the head position of the relay area 36 at the position E corresponding to the tail position B-1 of the first recordable area 32, in the second layer in which the second recordable area 33 exists.

Then, the relay area forming device 16 sets the length of the relay area 36. The relay area 36 is desirably short. The length of the relay area 36 is desirably equal to the one recording unit length. Reducing the length of the relay area 36 allows a reduction in the size of the data to be transferred in a step S22 described later, which can reduce the time required for the data transfer. If it is set to equalize the length of the relay area 36 and the one recording unit length, the tail position of the relay area 36 is a point (G-1) immediately before G.

Then, the relay area forming device 16 transfers another data that is already recorded in the location in which the relay area 36 is formed, into the second recordable area 33, to thereby make the location with the relay area 36 formed recordable (step S22). As a result, as shown in FIG. 11, the location with the relay area 36 formed becomes the third recordable area. Moreover, for example, if another data recorded in the location with the relay area 36 formed is transferred between a position H and a point (D-1) immediately before the position D in the second recordable area 33, the tail position of the second recordable area 33 is a point (H-1) immediately before the position H.

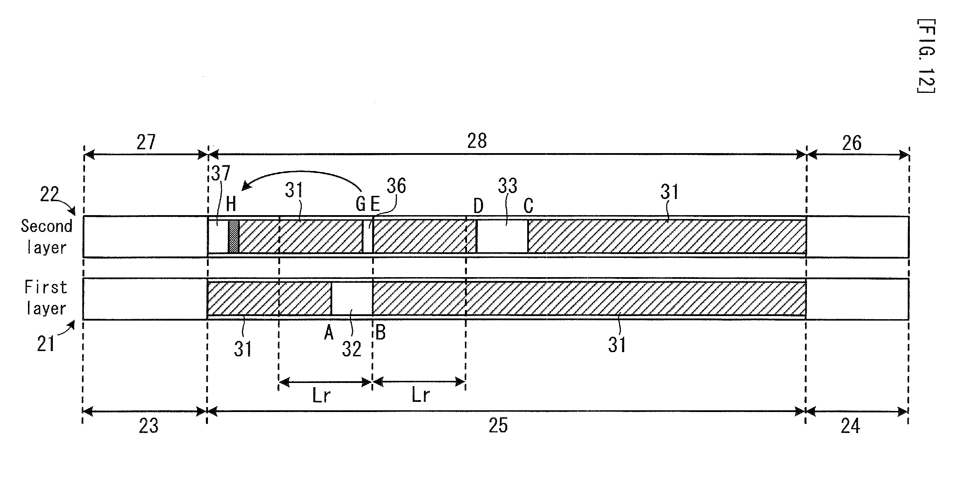

The location to which the aforementioned another data is transferred is desirably in the recordable area which exists in the same layer as that in which the another data is recorded. Incidentally, the location to which the another data is transferred is not limited in the second recordable area 33 if it is in the recordable area which exists in the same layer as that in which the another data is recorded. In the example shown in FIG. 11, the recordable area which exists in the layer in which the another data is recorded, i.e. the second layer, is only the second recordable area 33, so that there is no choice but to set the location to which the another data is transferred, to be in the second recordable area 33. As shown in FIG. 12, however, if there is another recordable area 37 on the inner circumferential side of the user data area 28 in the second layer, the location to which the another data is transferred may be in the recordable area 37.

With that, the relay area forming process is completed. The operation of the recording apparatus 10 is shifted from the step S12 in FIG. 4 to a step S13 to a step S15 in FIG. 5. Then, in the step S13 to the step S15, the recording apparatus 10 sequentially records the target data into the first recordable area 32, the relay area 36, and the second recordable area 33.

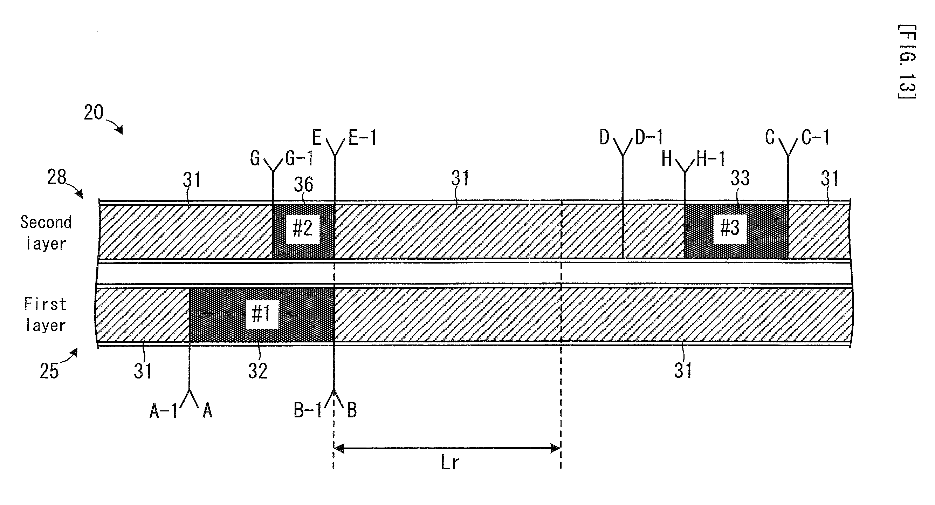

The recording is performed by the recording device 13, for example, as follows. The recording device 13 firstly records the target data from the head position A to the tail position B-1 of the first recordable area 32 shown in FIG. 11 (step S13). Then, the recording device records the remaining portion of the target data from the head position E of the relay area 36 to a tail position G-1 of the relay area 36 (step S14). Then, the recording device 13 records the additional remaining portion of the target data from the head position C to a tail position H-1 of the second recordable area 33 (step S15). As a result, as shown in FIG. 13, the target data is divided into the data blocks #1, #2, and #3 and recorded on the dual-layer rewritable type DVD 20.

On the other hand, if the first recordable area 32 and the second recordable area 33 exist in the same layer (the step S1: NO), the recording apparatus 10 sequentially records the target data into the first recordable area and the second recordable area (the steps S2 and S3).

With that, the recording apparatus 10 completes the operation upon the data recording.

The target data recorded in such a data recording operation by the recording apparatus 10, i.e. the data blocks #1, #2, and #3, is reproduced by a reproducing apparatus (e.g. DVD player), for example, as follows.

Firstly, the reproduction of the data blocks #1, #2, and #3 shown in FIG. 9 is performed as follows. Firstly, the reproducing apparatus irradiates a light beam on the position A in the user data area 25 in the first layer, and reads the data of the data block #1 from the head position A to the tail position B-1. The reproducing apparatus stores the read data into a stream buffer memory provided for the reproducing apparatus, and immediately reproduces the data stored in the stream buffer. If completing the reading of the data at the tail position B-1 of the data block #1, the reproducing apparatus jumps the irradiation position of the light beam to a position X in the user data area 25 in the first layer in order to start the reading of the data of the data block #2. Then, the reproducing apparatus jumps the irradiation position of the light beam from the position X to the position F in the user data area 28 in the second layer.

The distance between the position B-1 and the position X in the first layer is less than or equal to the predetermined distance Lr (e.g. 65536 sectors). Therefore, as long as the reproducing apparatus complies with the aforementioned matter (b2) defined in the VR standard, it takes 1.5 seconds or less to set the irradiation position of the light beam from the position B-1 through the position X and make it jump to the position F in the second layer. As a result, as long as the reproducing apparatus complies with the aforementioned matters (a1) and (a2) defined in the VR standard or the like, the seamless reproduction is guaranteed between the data blocks #1 and #2.

Then, the reproducing apparatus reads the data of the data block #2 recorded in the user data area 28 in the second layer from the head position F to the tail position D-1, stores the read data into the steam buffer, and sequentially reproduces the data stored in the buffer memory. If completing the reading of the data at the tail position D-1 of the data block #2, the reproducing apparatus jumps the irradiation position of the light beam to the position C in the user data area 28 in the second layer in order to start the reading of the data of the data block #3. Then, the reproducing apparatus reads the data of the data block #3 from the head position C to the tail position F-1, stores the read data into the stream buffer, and sequentially reproduces the data stored in the stream buffer. If completing the reading of the data at the tail position F-1 of the data block #3, the reproducing apparatus completes the data reading. After that, the reproduction of the data stored in the stream buffer memory is continued for a while. Then, when all the data stored in the stream buffer memory is reproduced, the reproduction operation is completed.

The data blocks #2 and #3 are recorded in the same layer. Therefore, as long as the reproducing apparatus complies with the aforementioned matters (a1) and (a2) defined in the VR standard or the like, the seamless reproduction is guaranteed between the data blocks #2 and #3.

By this, in FIG. 9, the seamless reproduction is guaranteed between the data blocks #1 and #2, and the seamless reproduction is guaranteed between the data blocks #2 and #3. As a result, the seamless reproduction is guaranteed over the three data blocks #1 to #3.

Then, the reproduction of the data blocks #1, #2, and #3 shown in FIG. 13 is performed as follows. The reproducing apparatus firstly irradiates the light beam on the position A in the user data area 25 in the first layer, and reads the data of the data block #1 from the head position A to the tail position B-1. The reproducing apparatus stores the read data into the steam buffer, and immediately reproduces the data stored in the buffer memory. If completing the reading of the data at the tail position B-1 of the data block #1, the reproducing apparatus jumps the irradiation position of the light beam from the position B-1 in the first layer to the position E in the user data area 28 in the second layer in order to start the reading of the data of the data block #2.

The distance between the position B-1 and the position E in the first layer is less than or equal to the predetermined distance Lr (e.g. 65536 sectors). Therefore, as long as the reproducing apparatus complies with the aforementioned matter (b2) defined in the VR standard, it takes 1.5 seconds or less to jump the irradiation position of the light beam from the position B-1 to the position E. As a result, as long as the reproducing apparatus complies with the aforementioned matters (a1) and (a2) defined in the VR standard or the like, the seamless reproduction is guaranteed between the data blocks #1 and #2.

Then, the reproducing apparatus reads the data of the data block #2 recorded in the user data area 28 in the second layer from the head position E to the tail position G-1, stores the read data into the steam buffer, and sequentially reproduces the data stored in the buffer memory. If completing the reading of the data at the tail position G-1 of the data block #2, the reproducing apparatus jumps the irradiation position of the light beam to the position C in the user data area 28 in the second layer in order to start the reading of the data of the data block #3. Then, the reproducing apparatus reads the data of the data block #3 from the head position C to the tail position H-1, stores the read data into the stream buffer, and sequentially reproduces the data stored in the stream buffer. If completing the reading of the data at the tail position H-1 of the data block #3, the reproducing apparatus completes the data reading. After that, the reproduction of the data stored in the stream buffer memory is continued for a while. Then, when all the data stored in the stream buffer memory is reproduced, the reproduction operation is completed.

The data blocks #2 and #3 are recorded in the same layer. Therefore, as long as the reproducing apparatus complies with the aforementioned matters (a1) and (a2) defined in the VR standard or the like, the seamless reproduction is guaranteed between the data blocks #2 and #3.

By this, in FIG. 13, the seamless reproduction is guaranteed between the data blocks #1 and #2, and the seamless reproduction is guaranteed between the data blocks #2 and #3. As a result, the seamless reproduction is guaranteed over the three data blocks #1 to #3.

As explained above, the recording apparatus 10 sequentially records the data to be sequentially reproduced, into (a) the first recordable area, (b) the relay area which exists in the same layer as that of the second recordable area and which is at the predetermined distance or less from the first recordable area, and (c) the second recordable area, in this order, if the distance between the first recordable area and the second recordable area, which exist in the different layers, is less than or equal to the predetermined distance Lr. By this, even if the two recordable areas exist in the different layers and are significantly away from each other on the dual-layer rewritable type DVD, the data can be recorded onto the dual-layer rewritable type DVD so as to guarantee the seamless reproduction.

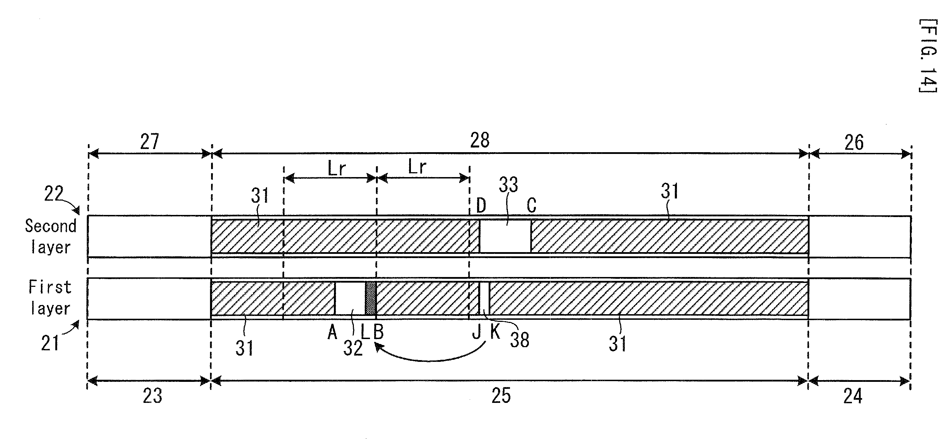

Incidentally, in the aforementioned explanation, the recording device 13 sequentially records the data to be sequentially reproduced, into (a) the first recordable area, (b) the relay area which exists in the same layer as that of the second recordable area and which is at the predetermined distance or less from the first recordable area, and (c) the second recordable area, in this order if the distance between the first recordable area and the second recordable area, which is recognized by the distance recognizing device 11, is not less than or equal to the predetermined distance on the basis of the judgment result of the distance judging device 12. The present invention, however, is not limited to this. The recording device 13 may sequentially record the data to be sequentially reproduced, into (a) the first recordable area 32, (b) the relay area 38 which exists in the same layer as that of the first recordable area 32 and which is at the predetermined distance Lr or less from the second recordable area 33, and (c) the second recordable area 33, in this order, as shown in FIG. 14, if the distance between the first recordable area and the second recordable area, which is recognized by the distance recognizing device 11, is not less than or equal to the predetermined distance on the basis of the judgment result of the distance judging device 12,. That is, in this case, the relay area forming device 16forms the relay area 38 in the location which is in the same layer as that of the first recordable area 32 and which is at the predetermined distance Lr or less from the second recordable area 33.

Moreover, in the aforementioned explanation, the recording apparatus, as shown in FIG. 3 to FIG. 6, performs the relay area forming process in the operations upon the data recording. That is, the recording apparatus 10 judges whether or not it is necessary to form the relay area after receiving an instruction to record the data from the user, and then forms the relay area if needed, and then records the data. The present invention, however, is not limited to this. The judgment of the necessity for the formation of the relay area and the relay area forming process may be performed not in the data recording operation but at another time.

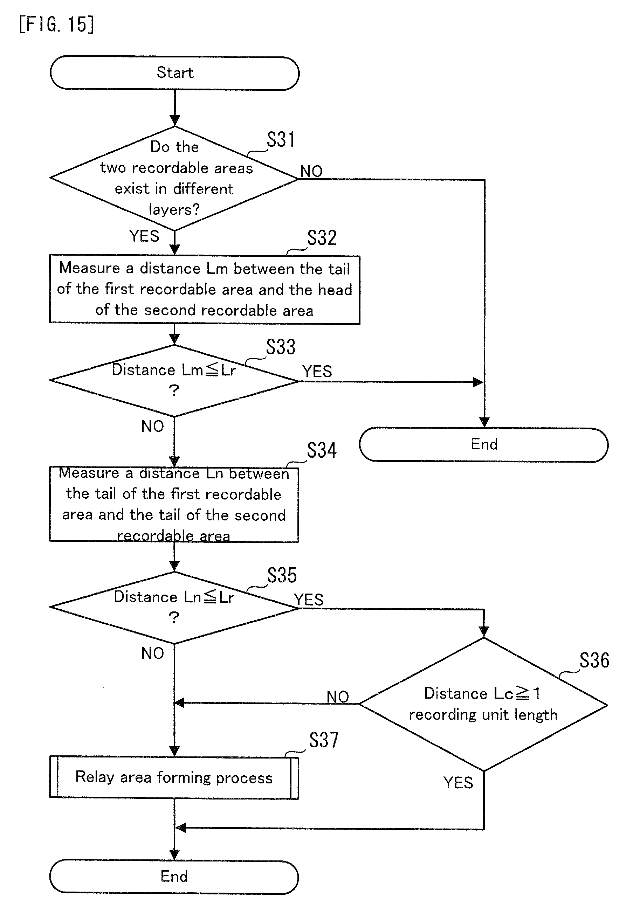

For example, it is assumed that after recording a long-time content onto the dual-layer rewritable type DVD 20, a user deletes one portion of the first half and one portion of the latter half of the content. Immediately after this, i.e. immediately after a data deleting process or a data editing process, the judgment of the necessity for the formation of the relay area and the relay area forming process may be performed, with or without a user's instruction to record the data. For example, immediately after the data deleting process or the data editing process, the recording apparatus performs the operations shown in FIG. 15. Steps S31 to S37 in FIG. 15 correspond to the steps S1, S4, S5, S6, S7, S8, and S12, respectively, and they have the same operations of the recording apparatus or the same process content in the corresponding steps between the both figures.

By this, when the data deleting process or the data editing process is performed, the relay area is immediately formed if needed. Therefore, after that, when an instruction to record a new content onto the dual-layer rewritable type DVD 20 is entered by the user, the recording apparatus 10 can quickly record the data corresponding to the new content onto the dual-layer rewritable type DVD 20. That is, it is not necessary to perform the relay area forming process after receiving the instruction to record the data from the user, it is possible to quickly start the actual data recording in response to the instruction.

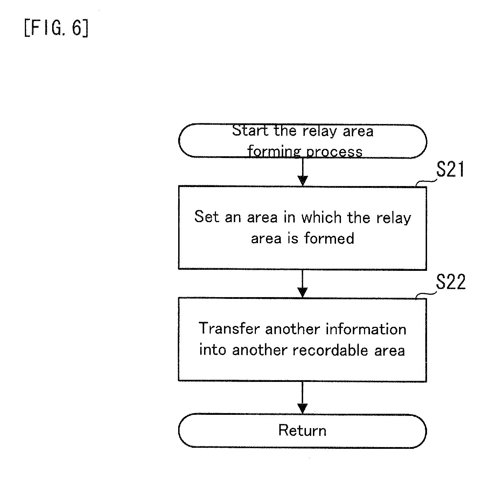

Moreover, the aforementioned embodiment may be realized in a unified form with hardware as an exclusive apparatus, or may be realized by making a computer read a program. If it is realized by making a computer read a computer program, such a computer program is created that describes commands or the like to realize the operations of the recording apparatus 10 shown in FIG. 3 to FIG. 6 or the operations of the recording apparatus 10 shown in FIG. 15 and FIG. 6. Then, by making a computer read the computer program, the computer resource is set to function as the distance recognizing device 11, the distance judging device 12, and the recording device 13 shown in FIG. 1.

Moreover, the distance recognizing device 11 in FIG. 1 is a specific example of the distance recognizing device, the distance judging device 12 is a specific example of the distance recognizing device, and the recording device 13 is a specific example of the recording device. Moreover, the layer judging device 14 is a specific example of the layer judging device, the distance measuring device 15 is a specific example of the distance measuring device, and the relay area forming device 16 is a specific example of the relay area forming device.

Moreover, the steps S1 and S4 in FIG. 3 is a specific example of the distance recognizing process, and the step S5 is a specific example of the distance judging process. Moreover, the step S12 in FIG. 3 and the steps S13 to S15 in FIG. 4 are a specific example of the recording process. Moreover, the steps S31 and S32 in FIG. 15 are a specific example of the distance recognizing process, the step S33 is a specific example of the distance judging process, and the step S37 is a specific example of the relay area forming process.

### Example

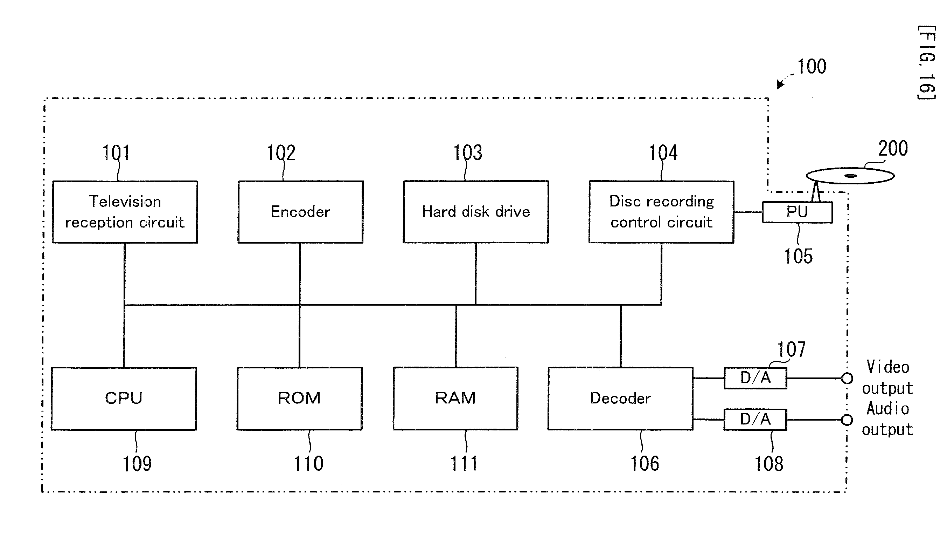

FIG. 16 shows a recording apparatus in an example of the present invention. A recording apparatus 100 in FIG. 16 is a recording apparatus for receiving content data, such as a TV program transmitted from a television broadcast station, and recording it onto a hard disk or a dual-layer DVD-RW 200. The recording apparatus 100 is, for example, a television tuner / hard disk drive built-in type DVD recorder. The recording apparatus 100 is provided with: a television reception circuit 101; an encoder 102; a hard disk drive 103; a disc recording control circuit 104; an optical pickup 105; a decoder 106; digital-analog converter 107 and 108; a CPU 109; a ROM 110; and a RAM 111.

The recording apparatus 100 records the content data transmitted from the television broadcast station onto the hard disk, for example, as follows. That is, the television reception circuit 101 receives the content data corresponding to a TV program transmitted from the television broadcast station and supplies it to the encoder 102. The encoder 102 encodes the content data supplied from the television reception circuit 101 at a predetermined bit rate, and supplies it to the hard disk drive 103. The hard disk 103 records the content data supplied from the encoder 102 onto the hard disk.

The recording apparatus 100 records the content data transmitted from the television broadcast station onto the dual-layer DVD-RW 200, for example, as follows. That is, the television reception circuit 101 receives the content data corresponding to a TV program transmitted from the television broadcast station and supplies it to the encoder 102. The encoder 102 encodes the content data supplied from the television reception circuit 101 at a predetermined bit rate, and supplies it to the disc recording control circuit 104. The disc recording control circuit 104 controls the optical pickup 105 to record the content data supplied from the encoder 102 onto the dual-layer DVD-RW 200.

The recording apparatus 100 has a function of editing the content data recorded on the dual-layer DVD-RW 200, such as deleting the content data recorded on the dual-layer DVD-RW 200.

The recording apparatus 100 has a function of recording the content data onto the dual-layer DVD-RW 200 so as to guarantee the seamless reproduction even if the two recordable areas exist in the different layers and are significantly away from each other on the dual-layer DVD-RW 200 by performing the operations shown in FIG. 3 to FIG. 6. That is, the ROM 110 of the recording apparatus 100 has a recorded program which indicates the data recording operation shown in FIG. 3 to FIG. 6. The recording apparatus 100 executes this program on the CPU 109, to thereby perform the data recording operation shown in FIG. 3 to FIG. 6. When the recording apparatus 100 performs the data recording operation, the CPU 109, the ROM 110, and the RAM 111 or the like function as the distance recognizing device 11 and the distance judging device 12 shown in FIG. 1. Moreover, the CPU 109, the ROM 110, the RAM 111 and the disc recording control circuit 104 function as the recording device 13 shown in FIG. 1.

The recording apparatus 100 has a function of reproducing the content data recorded on the hard disk. The recording apparatus 100 reproduces the content data recorded on the hard disk, for example, as follows. That is, the hard disk drive 103 supplies the content data recorded on the hard disk, to the decoder 106. The decoder 106 decodes the content data supplied from the hard disk drive 103, supplies video data obtained by the decoding to the digital-analog converter 107 for video, and supplies audio data obtained by the decoding to the digital-analog converter 108 for audio. The digital-analog converter 107 converts the video data supplied from the decoder 106, to an analog video signal, and outputs the video signal to e.g. a display panel connected to the recording apparatus 100. Moreover, the digital-analog converter 108 converts the audio data supplied from the decoder 106, to an analog audio signal, and outputs the audio signal to e.g. a speaker connected to the recording apparatus 100.

The recording apparatus 100 has a function of controlling the optical pickup 105 to read reading the content data recorded on the dual-layer DVD-RW 200, and further has a function of controlling the decoder 106 and the digital-analog converters 107 and 108 to reproduce the read content data.

Incidentally, in the present invention, various changes may be made, if desired, without departing from the essence or spirit of the invention which can be read from the claims and the entire specification. A recording apparatus, a recording method, and a computer program which realizes these functions, all of which involve such changes, are also intended to be within the technical scope of the present invention.

### Industrial Applicability

The recording apparatus and the recording method according to the present invention can be applied to a recording apparatus or the like for recording information onto a recordable type information recording medium with a plurality of layers. Moreover, they can be applied to a recording apparatus or the like which is mounted on various computer equipment for consumer use or for commercial use, or which can be connected to various computer equipment.

## Claims

1. A recording apparatus for recording information onto an information recording medium with a plurality of layers, said recording apparatus comprising:
a distance recognizing device for recognizing a distance between a first recordable area and a second recordable area, which exist in different layers;
a distance judging device for judging whether or not the distance recognized by said distance recognizing device is less than or equal to a predetermined distance; and
a recording device for sequentially recording the information to be sequentially reproduced, into (a) the first recordable area, (b) a relay area which exists in the same layer as that of the second recordable area and which is at the predetermined distance or less from the first recordable area, and (c) the second recordable area, in this order if the distance recognized by said distance recognizing device is not less than or equal to the predetermined distance on the basis of a result of the judgment by said distance judging device.

2. The recording apparatus according to claim 1, wherein said distance recognizing device comprises:
a layer judging device for judging whether or not the first recordable area and the second recordable area exist in the different layers; and
a distance measuring device for measuring the distance between the first recordable area and the second recordable area.

3. The recording apparatus according to claim 1, wherein said distance recognizing device recognizes a distance between a tail of the first recordable area and a head of the second recordable area.

4. The recording apparatus according to claim 1, wherein a value of the predetermined distance is a maximum value of the distance which guarantees seamless reproduction between information recorded in the two recordable areas.

5. The recording apparatus according to claim 1, wherein the predetermined distance is 65536 sectors.

6. The recording apparatus according to claim 1, wherein a length of the relay area is equal to a length of one recording unit for the information.

7. The recording apparatus according to claim 1, wherein said recording device sequentially records the information to be sequentially reproduced, into (a) the first recordable area, (b) a relay area which exists in the second recordable area and which is at the predetermined distance or less from the first recordable area, and (c) an area other than the relay area in the second recordable area, in this order if a distance between a tail of the first recordable area and a head of the second recordable area is not less than or equal to the predetermined distance and a distance between the tail of the first recordable area and a tail of the second recordable area is less than the predetermined distance.

8. The recording apparatus according to claim 1, wherein
said recording apparatus has a relay area forming device, and
said relay area forming device transfers another information into the first recordable area, the second recordable area, or another recordable area when the another information is already recorded in a location to be regarded as the relay area, to thereby form the relay area.

9. A recording apparatus for recording information onto an information recording medium with a plurality of layers, said recording apparatus comprising:
a distance recognizing device for recognizing a distance between a first recordable area and a second recordable area, which exist in different layers;
a distance judging device for judging whether or not the distance recognized by said distance recognizing device is less than or equal to a predetermined distance; and
a recording device for sequentially recording the information to be sequentially reproduced, into (a) the first recordable area, (b) a relay area which exists in the same layer as that of the first recordable area and which is at the predetermined distance or less from the second recordable area, and (c) the second recordable area, in this order if the distance recognized by said distance recognizing device is not less than or equal to the predetermined distance on the basis of a result of the judgment by said distance judging device.

10. The recording apparatus according to claim 9, wherein said distance recognizing device comprises:
a layer judging device for judging whether or not the first recordable area and the second recordable area exist in the different layers; and
a distance measuring device for measuring the distance between the first recordable area and the second recordable area.

11. The recording apparatus according to claim 9, wherein said distance recognizing device recognizes a distance between a tail of the first recordable area and a head of the second recordable area.

12. The recording apparatus according to claim 9, wherein a value of the predetermined distance is a maximum value of the distance which guarantees seamless reproduction between information recorded in the two recordable areas.

13. The recording apparatus according to claim 9, wherein the predetermined distance is 65536 sectors.

14. The recording apparatus according to claim 9, wherein a length of the relay area is equal to a length of one recording unit for the information.

15. The recording apparatus according to claim 1, wherein
said recording apparatus has a relay area forming device, and
said relay area forming device transfers another information into the first recordable area, the second recordable area, or another recordable area when the another information is already recorded in a location to be regarded as the relay area, to thereby form the relay area.

16. A recording apparatus for recording information onto an information recording medium with a plurality of layers, said recording apparatus comprising:
a distance recognizing device for recognizing a distance between two recordable areas, which exist in different layers;
a distance judging device for judging whether or not the distance recognized by said distance recognizing device is less than or equal to a predetermined distance; and
a relay area forming device for forming a relay area in a location which is in the same layer as that of one of the two recordable areas and which is at the predetermined distance or less from the other recordable area if the distance recognized by said distance recognizing device is not less than or equal to the predetermined distance on the basis of a result of the judgment by said distance judging device.

17. A recording method of recording information onto an information recording medium with a plurality of layers, said recording method comprising:
a distance recognizing process of recognizing a distance between a first recordable area and a second recordable area, which exist in different layers;
a distance judging process of judging whether or not the distance recognized by said distance recognizing process is less than or equal to a predetermined distance; and
a recording process of sequentially recording the information to be sequentially reproduced, into (a) the first recordable area, (b) a relay area which exists in the same layer as that of the second recordable area and which is at the predetermined distance or less from the first recordable area, and (c) the second recordable area, in this order if the distance recognized by said distance recognizing process is not less than or equal to the predetermined distance on the basis of a result of the judgment by said distance judging process.

18. A recording method of recording information onto an information recording medium with a plurality of layers, said recording method comprising:
a distance recognizing process of recognizing a distance between a first recordable area and a second recordable area, which exist in different layers;
a distance judging process of judging whether or not the distance recognized by said distance recognizing process is less than or equal to a predetermined distance; and
a recording process of sequentially recording the information to be sequentially reproduced, into (a) the first recordable area, (b) a relay area which exists in the same layer as that of the first recordable area and which is at the predetermined distance or less from the second recordable area, and (c) the second recordable area, in this order if the distance recognized by said distance recognizing process is not less than or equal to the predetermined distance on the basis of a result of the judgment by said distance judging process.

19. A recording method of recording information onto an information recording medium with a plurality of layers, said recording method comprising:
a distance recognizing process of recognizing a distance between two recordable areas, which exist in different layers;
a distance judging process of judging whether or not the distance recognized by said distance recognizing process is less than or equal to a predetermined distance; and
a relay area forming process of forming a relay area in a location which is in the same layer as that of one of the two recordable areas and which is at the predetermined distance or less from the other recordable area if the distance recognized by said distance recognizing process is not less than or equal to the predetermined distance on the basis of a result of the judgment by said distance judging process.

20. A computer program making a computer function as the recording apparatus according to claim 1.

21. A computer program making a computer function as the recording apparatus according to claim 9.
